# EUROPEAN PATENT SPECIFICATION

(11) **EP 4 183 542 B1**
(45) Date of publication and mention of the grant of the patent: **28.02.2024**
(21) Application number: 23150382.2
(22) Date of filing: 07.11.2017
(51) Int. Cl.: B29B 7/32, B29B 7/60, B29B 7/88, B29B 7/94, B29B 17/00, B29B 17/02, B29B 17/04, B29C 48/36, B29C 48/44, C08G 63/183, D01D 1/06, D01D 1/09, D01F 1/04, D01F 1/06, D01F 6/62, B29B 7/72, B29B 7/74, B29K 67/00

(54) **POLYETHYLENE TEREPHTHALATE COLORING METHOD**
POLYETHYLENTEREPHTHALAT-FÄRBEVERFAHREN
PROCÉDÉ DE COLORATION AU POLYÉTHYLÈNE TÉRÉPHTALATE

(30) Priority: 10.11.2016 US 201615348591; 06.11.2017 US 201715804501
(43) Date of publication of application: 24.05.2023
(62) Divisional of application: 17869117.6
(73) Proprietor: Aladdin Manufacturing Corporation, Calhoun, GA 30701 (US)
(72) Inventor: CLARK, Thomas R., 37343 Chattanooga (US)
(74) Representative: Unilin Technologies

(56) References cited:
- US-A1- 2004 218 469
- US-A1- 2005 263 941
- US-A1- 2018 126 595
- US-A1- 2020 055 213
- US-B1- 8 597 553

## Description

### BACKGROUND

Producing different colored polyethylene terephthalate (PET) (e.g., using virgin and/or recycled PET) for use in the production of products (e.g., such as carpet or other products) may result in unnecessary waste. Accordingly, there is a need to develop improved coloring systems for PET.

US2005/263941A1 discloses an apparatus and a method for spinning dyed filaments from a dyed polymer melt. An undyed polymer melt is produced by a melt producer. A liquid dye is added to the polymer melt by means of a dye metering device. To mix the liquid dye and dye the polymer melt, a mixing unit is provided. The dyed polymer is then spun to filaments by means of a spin unit. To obtain before the spinning step a uniform coloration of the polymer melt despite the short dwelling time of the liquid dye in the polymer melt, the liquid dye and the polymer melt are mixed in a plurality of successive mixing units which are formed by a mixer combination comprising at least one static mixer and at least one dynamic mixer.

### SUMMARY

The present invention is a method, according to claim 1, of manufacturing colored bulked continuous carpet filament from a polymer melt comprising polyethylene terephthalate (PET) using liquid colorant, the method comprising:
- providing a static mixing assembly comprising at least twenty static mixers arranged in series;
- providing a liquid metering system;
- providing a first liquid colorant having a first color;
   using the liquid metering system to inject the first liquid colorant into the polymer melt;
   after the step of using the liquid metering system to inject the first liquid colorant into the polymer melt, passing the polymer melt and the first liquid colorant through the static mixing assembly to substantially thoroughly mix the polymer melt with the first liquid colorant; and
   after the step of passing the polymer melt through the static mixing assembly to substantially thoroughly mix the polymer melt with the first liquid colorant, forming the polymer melt into bulked continuous carpet filament having a color based on the first color,
   characterized in that the method comprises the steps of:
- providing a second liquid colorant having a second color;
- using the liquid metering system to cease injection of the first liquid colorant into the polymer melt;
- after the step of using the liquid metering system to cease injection of the first liquid colorant into the polymer melt, using the liquid metering system to inject the second liquid colorant into the polymer melt;
- forming the polymer melt into bulked continuous carpet filament having a waste color for at least a color changeover time;
- after the color changeover time has passed, passing the polymer melt and the second liquid colorant through the static mixing assembly to substantially thoroughly mix the polymer melt with the second liquid colorant;
after the step of passing the polymer melt through the static mixing assembly to substantially thoroughly mix the polymer melt with the second liquid colorant, forming the polymer melt into bulked continuous carpet filament having a color based on the second color.

The dependent claims describe preferred embodiments of the invention.

A method - not according to the claimed invention - of manufacturing colored bulked continuous carpet filament from a polymer melt comprising polyethylene terephthalate (PET) using liquid colorant, in particular embodiments, comprises: (A) providing a static mixing assembly comprising between twenty and forty static mixers; (B) providing a liquid metering system; (C) providing a first liquid colorant having a first color; (D) using the liquid metering system to inject the first liquid into the polymer melt; (E) after the step of using the liquid metering system to inject the first liquid colorant into the polymer melt, passing the polymer melt and the first liquid colorant through the static mixing assembly to substantially thoroughly mix the polymer melt with the first liquid colorant; and (F) after the step of passing the polymer melt through the static mixing assembly to substantially thoroughly mix the polymer melt with the first liquid colorant, forming the polymer melt into bulked continuous carpet filament having a color based on the first color.

A method - not according to the claimed invention - of manufacturing colored bulked continuous carpet filament from recycled polyethylene terephthalate (PET) bottles using a single multi-screw extruder, in various embodiments, comprises: (A) providing a plurality of recycled PET bottles; (B) grinding the plurality of recycled PET bottles into a group of polymer flakes, the group of flakes comprising a first plurality of flakes that consist essentially of PET and a second plurality of flakes that do not consist essentially of PET; (C) washing the group of polymer flakes to remove at least a portion of one or more contaminants from a surface of the polymer flakes; (D) after the step of washing the first plurality of flakes: (i) scanning the washed group of flakes to identify the second plurality of flakes, and (ii) separating the second plurality of flakes from the first plurality of flakes.

In particular embodiments not according to the claimed invention, the method further comprises: providing a multi-screw extruder that comprises: (i) a first satellite screw extruder, the first satellite screw extruder comprising a first satellite screw that is mounted to rotate about a central axis of the first satellite screw; (ii) a second satellite screw extruder, the second satellite screw extruder comprising a second satellite screw that is mounted to rotate about a central axis of the second satellite screw; (iii) a third satellite screw extruder, the third satellite screw extruder comprising a third satellite screw that is mounted to rotate about a central axis of the third satellite screw; (iv) a fourth satellite screw extruder, the fourth satellite screw extruder comprising a fourth satellite screw that is mounted to rotate about a central axis of the fourth satellite screw; and (v) a pressure regulation system that is adapted to maintain a pressure within the first, second, third, and fourth satellite screw extruders between about 0 millibars and about 25 millibars.

In various embodiments not according to the claimed invention, the method further comprises: (A) using the pressure regulation system to reduce a pressure within the first, second, third, and fourth satellite screw extruders to between about 0 millibars and about 25 millibars; and (B) using the multi-screw extruder to at least partially melt the first plurality of flakes into a polymer melt and at least partially purify the polymer melt by, while maintaining the pressure within the first, second, third, and fourth satellite screw extruders between about 0 millibars and about 5 millibars, passing the polymer melt through the multi-screw extruder so that: (1) a first portion of the melt passes through the first satellite screw extruder, (2) a second portion of the melt passes through the second satellite screw extruder, (3) a third portion of the melt passes through the third satellite screw extruder, and (4) a fourth portion of the melt passes through the fourth satellite screw extruder.

In some embodiments not according to the claimed invention, the method further comprises: (A) providing a liquid metering system; (B) providing a first liquid colorant having a first color; (C) after the step of using the multi-screw extruder to at least partially melt the first plurality of flakes into the polymer melt and at least partially purify the polymer melt, using the liquid metering system to inject the first liquid into the polymer melt; (D) providing a static mixing assembly; (E) passing the polymer melt and the first liquid colorant through the static mixing assembly to substantially thoroughly mix the polymer melt with the first liquid colorant; and (F) after the step of passing the polymer melt through the static mixing assembly to substantially thoroughly mix the polymer melt with the first liquid colorant, forming the polymer melt into bulked continuous carpet filament having a color based on the first color.

The method of manufacturing colored bulked continuous carpet filament, in various embodiments not according to the claimed invention, comprises providing a multi-screw extruder that comprises: (A) a first satellite screw extruder, the first satellite screw extruder comprising a first satellite screw that is mounted to rotate about a central axis of the first satellite screw; (B) a second satellite screw extruder, the second satellite screw extruder comprising a second satellite screw that is mounted to rotate about a central axis of the second satellite screw; and (C) a pressure regulation system that is adapted to maintain a pressure within the first and second satellite screw extruders between about 0 millibars and about 10 millibars. In particular embodiments, the method further comprises: (A) using the pressure regulation system to reduce a pressure within the first and second satellite screw extruders to between about 0 millibars and about 10 millibars; and (B) while maintaining the pressure within the first and second satellite screw extruders between about 0 millibars and about 10 millibars, passing a melt comprising recycled polymer through the multi-screw extruder so that: (1) a first portion of the melt passes through the first satellite screw extruder, and (2) a second portion of the melt passes through the second satellite screw extruder.

In further embodiments not according to the claimed invention, the method of manufacturing colored bulked continuous carpet filament further comprises: (A) providing a liquid metering system; (B) providing a first liquid colorant having a first color; (C) after the step of passing the polymer melt through the multi-screw extruder, using the liquid metering system to inject the first liquid into the polymer melt; (D) providing a static mixing assembly comprising at least twenty individual static mixing elements; (E) passing the polymer melt and the first liquid colorant through the static mixing assembly to substantially thoroughly mix the polymer melt with the first liquid colorant; and (F) after the step of passing the polymer melt through the static mixing assembly to substantially thoroughly mix the polymer melt with the first liquid colorant, forming the polymer melt into bulked continuous carpet filament having a color based on the first color.

### BRIEF DESCRIPTION OF THE DRAWINGS

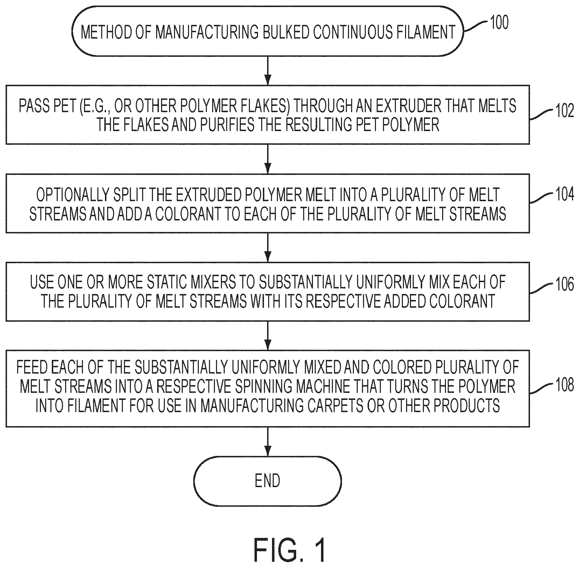

Reference will now be made to the accompanying drawings, which are not necessarily drawn to scale, wherein the embodiments shown in figures 1 to 13 and discussed below are embodiments not according to the claimed invention but represent some technical background necessary to understand the invention, and wherein:
FIG. 1 depicts a high level overview of a manufacturing process for producing and coloring bulked continuous filament.
FIG. 2 depicts a process flow, according to a particular embodiment, for adding a colorant to a stream of molten polymer downstream from a first extruder.
FIG. 3 is a perspective view of an MRS extruder that is suitable for use as the first extruder of Figure 2.
FIG. 4 is a cross-sectional view of an exemplary MRS section of the MRS extruder of FIG. 2.
FIG. 5 is a cross-sectional end view of dispersion of a colorant in a stream of molten polymer prior to passing through the one or more static mixers shown in FIG. 2.
FIG. 6 is a cross-sectional end view of dispersion of a colorant in a stream of molten polymer following passing through the one or more static mixers shown in FIGS. 2.
FIG. 7 is a cross-sectional end view of the exemplary one of the one or more static mixers of FIG. 2, according to a particular embodiment.
FIG. 8 is a side view of eight of the exemplary static mixers of FIG. 7 coupled to one another.
FIG. 9 is a perspective view of an exemplary helical static mixer according to a particular embodiment.
FIG. 10 is a perspective cutaway view of the helical static mixer of FIG. 9 showing four helical static mixing components.
FIG. 11 depicts a process flow, according to a particular embodiment, for adding various colorants to several streams of molten polymer downstream from a first extruder.
FIG. 12 depicts a process flow, according to another embodiment, for adding various colorants to several streams of molten polymer downstream from a first extruder.
FIG. 13 depicts a process flow, according to various embodiments, for adding a liquid colorant to a stream of molten polymer using a pump.
FIG. 14 depicts a process flow, according to the claimed invention, for adding liquid colorant to a stream of molten polymer using a pump, downstream from an extruder

### DETAILED DESCRIPTION OF VARIOUS EMBODIMENTS

Various embodiments will now be described in greater detail. Like numbers refer to like elements throughout.

### Overview

New processes for producing and coloring fiber from recycled polymer (e.g., recycled PET polymer) and virgin polymer (e.g., virgin PET polymer) are described below. In various embodiments, these new processes may include, for example: (1) extruding a polymer (e.g., such as PET) using a primary extruder; (2) adding a colorant to the extruded polymer downstream from the primary extruder (e.g., a liquid colorant injected into the extruded polymer via one or more liquid metering systems); (3) using one or more static mixers (e.g., up to thirty six static mixers) to substantially uniformly mix the extruded polymer and the added colorant; and (4) using a spinning machine to spin the uniformly mixed extruded polymer and added colorant into bulked continuous filament (e.g., carpet yarn) that has a color that is based on the added colorant. The process described herein may, for example, reduce an amount of waste related to changing a color of bulked continuous filament produced using a particular extruder when switching to a different colorant.

In various embodiments, this new process may, for example: (1) produce less waste than other processes when producing or changing a color of bulked continuous filament produced using a particular extruder or from a particular polymer stream; (2) facilitate the production of small batches of particular colors of filament (e.g., for use in rugs or less popular colors of carpet) at a relatively low cost; (3) increase a number of simultaneous filament colors that a single extruder can produce; and (4) etc. In at least one embodiment, the improved process results in reduction of waste of up to about 4000 pounds of fiber when switching from a first color to a second color (e.g., by adding the colorant downstream from the primary extruder rather than upstream).

### II. More Detailed Discussion

Figure 1 depicts a high level overview of a BCF manufacturing process 100 for producing and coloring BCF (bulked continuous filament), for example, for use in the production of carpet and other products. A BCF manufacturing process, according to a particular embodiment, may generally be broken down into four steps: (1) passing PET (e.g., or other polymer flakes) through an extruder that melts the flakes and purifies the resulting PET polymer (Step 102); (2) optionally splitting the extruded polymer melt into a plurality of melt streams and adding a colorant to each of the plurality of melt streams (Step 104); (3) using one or more static mixers to substantially uniformly mix each of the plurality of melt streams with its respective added colorant (Step 106); and (4) feeding each of the substantially uniformly mixed and colored plurality of melt streams into a respective spinning machine that turns the polymer into filament for use in manufacturing carpets (Step 108). These four steps are described in greater detail below.

### STEP 1: Using an Extrusion System to Melt and Purify PET

In various embodiments, the step of using an extrusion system to melt and purify PET (e.g., PET flakes and/or pellets) comprises: (A) preparing the PET for extrusion; and (B) using a suitable extruder to melt and purify the PET.

### Preparing the PET for extrusion

In particular embodiments, the step of preparing the PET for extrusion may vary based on a source of the PET. For example, in various embodiments, the process may utilize: (1) virgin PET (e.g., virgin PET pellets); (2) recycled PET (e.g., recycled PET flakes ground from recycled PET bottles and other suitable sources); and/or (3) a combination of virgin and recycled PET. In various embodiments in which the process utilizes recycled PET, the step of preparing the PET for extrusion may include sorting, grinding, washing and other steps designed to remove any impurities from the recycled PET prior to extrusion. These other PET preparation steps may, for example, be unnecessary in embodiments of the process that utilize virgin PET. Because using recycled PET in the process described herein may contribute to even further costs savings to those associated with a reduction in waste due to colorant changing, the process will be described below particularly with respect to recycled PET.

In a particular embodiment, preparing the PET for extrusion may include preparing flakes of PET polymer from post-consumer bottles or other sources of recycled PET. An exemplary process for preparing post-consumer bottles for use in the production of bulked continuous filament is described in U.S. Patent No. 8,597,553 B1, entitled "Systems and Methods for Manufacturing Bulked Continuous Filament" and published on December 3, 2013. Generally speaking, the step of preparing flakes of PET polymer from post-consumer bottles may comprise, for example: (A) sorting post-consumer PET bottles and grinding the bottles into flakes; (B) washing the flakes; and (C) identifying and removing any impurities or impure flakes.

### Sorting Post-Consumer PET bottles and Grinding the Bottles into Flakes

In particular embodiments, bales of clear and mixed colored recycled post-consumer (e.g., "curbside") PET bottles (or other containers) obtained from various recycling facilities make-up the post-consumer PET containers for use in the process. In other embodiments, the source of the post-consumer PET containers may be returned 'deposit' bottles (e.g., PET bottles whose price includes a deposit that is returned to a customer when the customer returns the bottle after consuming the bottle's contents). The curbside or returned "post-consumer" or "recycled" containers may contain a small level of non-PET contaminates. The contaminants in the containers may include, for example, non-PET polymeric contaminants (e.g., PVC, PLA, PP, PE, PS, PA, etc.), metal (e.g., ferrous and non-ferrous metal), paper, cardboard, sand, glass or other unwanted materials that may find their way into the collection of recycled PET. The non-PET contaminants may be removed from the desired PET components, for example, through one or more of the various processes described below.

In particular embodiments, smaller components and debris (e.g., components and debris greater than 2 inches in size) are removed from the whole bottles via a rotating trammel. Various metal removal magnets and eddy current systems may be incorporated into the process to remove any metal contaminants. Near Infra-Red optical sorting equipment such as the NRT Multi Sort IR machine from Bulk Handling Systems Company of Eugene, Oregon, or the Spyder IR machine from National Recovery Technologies of Nashville, Tennessee, may be utilized to remove any loose polymeric contaminants that may be mixed in with the PET flakes (e.g., PVC, PLA, PP, PE, PS, and PA). Additionally, automated X-ray sorting equipment such as a VINYLCYCLE machine from National Recovery Technologies of Nashville, Tennessee may be utilized to remove remaining PVC contaminants.

In particular embodiments, the sorted material is taken through a granulation step (e.g., using a 50B Granulator machine from Cumberland Engineering Corporation of New Berlin, Wisconsin) to size reduce (e.g., grind) the bottles down to a size of less than one half of an inch. In various embodiments, the bottle labels are removed from the resultant "dirty flake" (e.g., the PET flakes formed during the granulation step) via an air separation system prior to entering the wash process.

### Washing the Flakes

In particular embodiments, the "dirty flake" is then mixed into a series of wash tanks. As part of the wash process, in various embodiments, an aqueous density separation is utilized to separate the olefin bottle caps (which may, for example, be present in the "dirty flake" as remnants from recycled PET bottles) from the higher specific gravity PET flakes. In particular embodiments, the flakes are washed in a heated caustic bath to about 190 degrees Fahrenheit. In particular embodiments, the caustic bath is maintained at a concentration of between about 0.6% and about 1.2% sodium hydroxide. In various embodiments, soap surfactants as well as defoaming agents are added to the caustic bath, for example, to further increase the separation and cleaning of the flakes. A double rinse system then washes the caustic from the flakes.

In various embodiments, the flake is centrifugally dewatered and then dried with hot air to at least substantially remove any surface moisture. The resultant "clean flake" is then processed through an electrostatic separation system (e.g., an electrostatic separator from Carpco, Inc. of Jacksonville, Florida) and a flake metal detection system (e.g., an MSS Metal Sorting System) to further remove any metal contaminants that remain in the flake. In particular embodiments, an air separation step removes any remaining label from the clean flake. In various embodiments, an electro-optical flake sorter based at least in part on Raman technology (e.g., a Powersort 200 from Unisensor Sensorsysteme GmbH of Karlsruhe, Germany) performs the final polymer separation to remove any non-PET polymers remaining in the flake. This step may also further remove any remaining metal contaminants and color contaminants.

In various embodiments, the combination of these steps delivers substantially clean (e.g., clean) PET bottle flake comprising less than about 50 parts per million PVC (e.g., 25 ppm PVC) and less than about 15 parts per million metals for use in the downstream extrusion process described below.

### Identifying and Removing Impurities and Impure Flakes

In particular embodiments, after the flakes are washed, they are fed down a conveyor and scanned with a high-speed laser system 300. In various embodiments, particular lasers that make up the high-speed laser system 300 are configured to detect the presence of particular contaminates (e.g., PVC or Aluminum). Flakes that are identified as not consisting essentially of PET may be blown from the main stream of flakes with air jets. In various embodiments, the resulting level of non-PET flakes is less than 25 ppm.

In various embodiments, the system is adapted to ensure that the PET polymer being processed into filament is substantially free of water (e.g., entirely free of water). In a particular embodiment, the flakes are placed into a pre-conditioner for between about 20 and about 40 minutes (e.g., about 30 minutes) during which the pre-conditioner blows the surface water off of the flakes. In particular embodiments, interstitial water remains within the flakes. In various embodiments, these "wet" flakes (e.g., flakes comprising interstitial water) may then be fed into an extruder (e.g., as described below), which includes a vacuum setup designed to remove - among other things - the interstitial water that remains present in the flakes following the quick-drying process described above.

### Using an Extrusion System to Melt and Purify PET Flakes

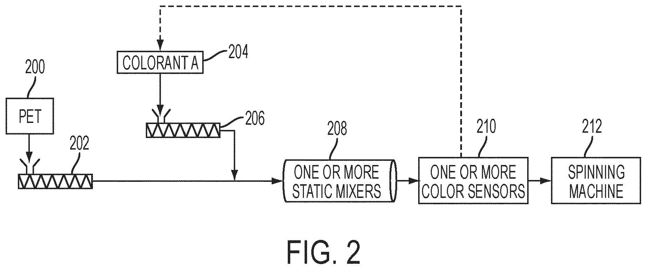

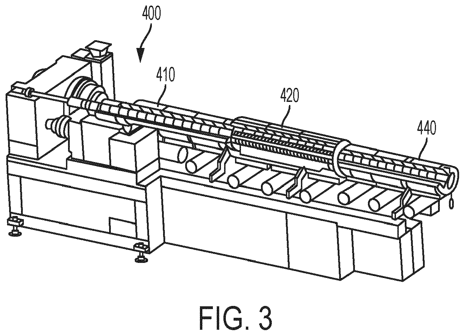

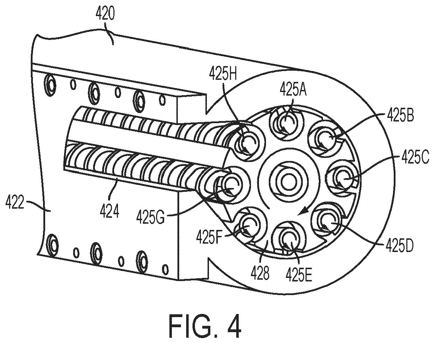

Figure 2 depicts an exemplary process flow for producing BCF with an added colorant according to a particular embodiments. As shown in Figure 2, in various embodiments, a suitable primary extruder 202 is used to melt and purify PET 200, such as any suitable PET 200 prepared in any manner described above. In a particular embodiment, the primary extruder 202 comprises any suitable extruder such as, for example, a Multiple Rotating Screw ("MRS") extruder, a twin screw extruder, a multiple screw extruder, a planetary extruder, or any other suitable extrusion system. An exemplary MRS Extruder 400 is shown in Figures 3 and 4. A particular example of such an MRS extruder is described in U.S. Published Patent Application 2005/0047267, entitled "Extruder for Producing Molten Plastic Materials", which was published on March 3, 2005.

As may be understood from Figures 3 and 4, in particular embodiments, the MRS extruder includes a first single-screw extruder section 410 for feeding material into an MRS section 420 and a second single-screw extruder section 440 for transporting material away from the MRS section.

As may be understood from Figure 3, in various embodiments, PET is first fed through the MRS extruder's first single-screw extruder section 410, which may, for example, generate sufficient heat (e.g., via shearing) to at least substantially melt (e.g., melt) the wet flakes.

The resultant polymer melt (e.g., comprising the melted PET), in various embodiments, is then fed into the extruder's MRS section 420, in which the extruder separates the melt flow into a plurality of different streams (e.g., 4, 6, 8, or more streams) through a plurality of open chambers. Figure 4 shows a detailed cutaway view of an MRS Section 420 according to a particular embodiment. In particular embodiments, such as the embodiment shown in this figure, the MRS Section 420 separates the melt flow into eight different streams, which are subsequently fed through eight satellite screws 425A-H. As may be understood from Figure 3, in particular embodiments, these satellite screws are substantially parallel (e.g., parallel) to one other and to a primary screw axis of the MRS Machine 400.

As shown in Figure 4, in particular embodiments: (1) the satellite screws 425AH are arranged within a single screw drum 428 that is mounted to rotate about its central axis; and (2) the satellite screws 425A-H are configured to rotate in a direction that is opposite to the direction in which the single screw drum rotates 428. In various other embodiments, the satellite screws 425A-H and the single screw drum 428 rotate in the same direction. In particular embodiments, the rotation of the satellite screws 425A-H is driven by a ring gear. Also, in various embodiments, the single screw drum 428 rotates about four times faster than each individual satellite screw 425A-H. In certain embodiments, the satellite screws 425A-H rotate at substantially similar (e.g., the same) speeds.

In various embodiments, as may be understood from Figure 4, the satellite screws 425A-H are housed within respective extruder barrels, which may, for example be about 30% open to the outer chamber of the MRS section 420. In particular embodiments, the rotation of the satellite screws 425A-H and single screw drum 428 increases the surface exchange of the polymer melt (e.g., exposes more surface area of the melted polymer to the open chamber than in previous systems). In various embodiments, the MRS section 420 creates a melt surface area that is, for example, between about twenty and about thirty times greater than the melt surface area created by a co-rotating twin screw extruder. In a particular embodiment, the MRS section 420 creates a melt surface area that is, for example, about twenty five times greater than the melt surface area created by a co-rotating twin screw extruder.

In various embodiments, the MRS extruder's MRS Section 420 is fitted with a vacuum pump that is attached to a vacuum attachment portion 422 of the MRS section 420 so that the vacuum pump is in communication with the interior of the MRS section via a suitable opening 424 in the MRS section's housing. In still other embodiments, the MRS Section 420 is fitted with a series of vacuum pumps. In particular embodiments, the vacuum pump is configured to reduce the pressure within the interior of the MRS Section 420 to a pressure that is between about 0.5 millibars and about 25 millibars. In particular embodiments, the vacuum pump is configured to reduce the pressure in the MRS Section 420 to less than about 5 millibars (e.g., about 1.8 millibars or less). The low-pressure vacuum created by the vacuum pump in the MRS Section 420 may remove, for example: (1) volatile organics present in the melted polymer as the melted polymer passes through the MRS Section 420; and/or (2) at least a portion of any interstitial water that was present in the wet flakes when the wet flakes entered the MRS Extruder 400. In various embodiments, the low-pressure vacuum removes substantially all (e.g., all) of the water and contaminants from the polymer stream.

In some embodiments, after the molten polymer is run the through the multi-stream MRS Section 420, the streams of molten polymer are recombined and flow into the MRS extruder's second single screw section 440. In particular embodiments, passage through the low pressure MRS Section 420 purifies the recycled polymer melt (e.g., by removing the contaminants and interstitial water) and makes the recycled polymer substantially structurally similar to (e.g., structurally the same as) pure virgin PET polymer. In particular embodiments, the resulting polymer is a recycled PET polymer (e.g., obtained 100% from post-consumer PET products, such as PET bottles or containers) having a polymer quality that is suitable for use in producing PET carpet filament using substantially only (e.g., only) PET from recycled PET products.

### Step 2: Add a Colorant to the Polymer Melt Downstream from the Primary Extruder

In particular embodiments, after the recycled PET polymer (e.g., or virgin PET) has been extruded and purified by the above-described extrusion process, a colorant is added to the resultant polymer melt. As shown in Figure 2, Colorant A 204 may be added to the polymer melt using a suitable secondary extruder 206. In various embodiments, the secondary extruder 206 may include any suitable extruder such as for example, any suitable single-screw extruder or other extruder described herein (e.g., a twin screw extruder, a multiple screw extruder, a planetary extruder, or any other suitable extrusion system). In particular embodiments, a suitable secondary extruder 206 may include, for example, an HPE-150 Horizontal Extruder manufactured by David-Standard, LLC of Pawcatuck, Connecticut.

In particular embodiments, Colorant A 204 may comprise pelletized color concentrate which the secondary extruder 208 is configured to at least partially melt prior to adding Colorant A 204 to the polymer melt. In various other embodiments, Colorant A 204 may comprise other additives such as, for example, a carrier resin which may aid in binding the colorant to the polymer. In other embodiments, Colorant A 204 may include any suitable liquid colorant which may be pumped into the polymer melt using any suitable pump (e.g., in lieu of using a secondary extruder 206 and pelletized color concentrate).

In various embodiments, the process may further include monitoring an amount of throughput (e.g., polymer output) from the primary extruder 202 in order to determine an appropriate amount of letdown (e.g., an appropriate let down ratio) such that a proper amount of Colorant A 204 is added to the polymer melt downstream from the primary extruder 202. In various embodiments, a desirable letdown ratio may include a letdown ration of between about two percent and about eight percent. In other embodiments, the letdown ratio may include any other suitable letdown ratio (e.g., one percent, two percent, three percent, four percent, five percent, six percent, seven percent, etc.). In particular embodiments, the letdown ratio may vary based on a desired color of bulked continuous filament ultimately produced using the process (e.g., up to about twenty percent).

In various embodiments, adding the colorant 204 downstream of the primary extruder 202 may save on waste during color changeover. For example, when switching between producing bulked continuous filament of a first color to producing bulked continuous filament of a second color, it is necessary to change the colorant 204 added to the polymer melt (e.g., from a first colorant that would result in bulked continuous filament of the first color to a second colorant that would result in bulked continuous filament of the second color). As may be understood by one skilled in the art, after switching from adding the first colorant to the polymer melt to adding the second colorant to the polymer melt, residual first colorant may remain in in the system between the point in the process at which the colorant is added and the spinning machine 212. For example, residual first colorant may remain in the secondary extruder 206, the one or more static mixers 208, or any other physical mechanism used in the process (such as any mechanism shown in Figure 2) or any piping or tubing which connects the various components of the system.

As may be understood by one skilled in the art, after running the process with the second colorant for a suitable amount of time, the bulked continuous filament produced by the process will eventually be of the second, desired color (e.g., because the first colorant will eventually be substantially flushed out the system). Between the point at which there is a changeover in adding the second colorant to the process rather than the first colorant and the point at which the process begins to produce the desired color of bulked continuous filament, the process will produce some waste bulked continuous filament that is of an undesired color (e.g., due at least in part to the residual first colorant).

In various embodiments, the waste bulked continuous filament produced using the process described herein may be considerably lower than waste bulked continuous filament produced during color changeovers using other processes (e.g., such as other processes in which colorant is added to PET prior to extrusion in a primary extruder such as an MRS extruder). For example, in various embodiment, the process described herein may limit waste bulked continuous filament to an amount of bulked continuous filament produced when running a single package of colorant (e.g., of the second colorant), which may, for example, result in less than about 100 pounds of waste. In particular embodiments, reducing waste may lead to cost saving in the production of bulked continuous filament.

### Step 3: Use One or More Static Mixers to Mix Polymer Melt with Added Colorant

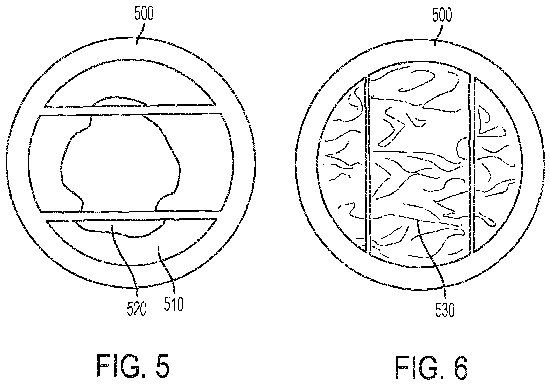

In particular embodiments, following the addition of Colorant A 204 to the stream of molten polymer, the process includes the use of one or more static mixers 208 (e.g., one or more static mixing elements) to mix and disperse Colorant A 204 throughout the polymer stream. As may be understood by one skilled in the art, due in part to the viscosity of the polymer stream (e.g., polymer melt), when a dye or other colorant is added to the polymer stream, the dye and the stream may not mix. In various embodiments, the flow of the polymer melt is substantially laminar (e.g., laminar) which may, for example, further lead to a lack of mixing. Figure 5 depicts a cross section view of a pipe 500 containing a polymer melt 510 into which a liquid colorant 520 has been added. As shown in this Figure, the liquid colorant 520 has not mixed with the polymer melt 510. Generally speaking, the unmixed polymer melt 510 and colorant 520 may not be suitable for forming into bulked continuous filament (e.g., because the resulting filament may not have a consistent, uniform color). Figure 6 depicts the pipe 500 of Figure 5 in which the liquid colorant 520 and the polymer melt 510 have been substantially thoroughly (e.g., uniformly) mixed into a colored melt stream 530. This substantially uniform mixing, in various embodiments, is achieved through the use of the one or more static mixers 208 as shown in Figure 2. Generally speaking, this uniformly mixed colored melt stream 530 shown in Figure 5 may be far more suitable for producing uniformly colored bulked continuous filament.

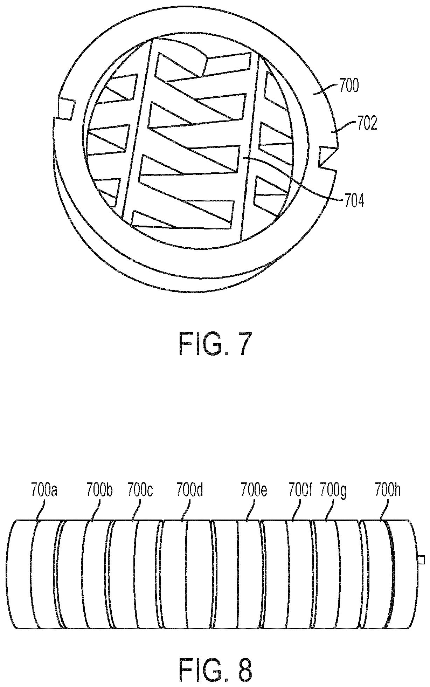

Figure 7 depicts an exemplary static mixer 700 which may, in various embodiments, be utilized in the achievement of substantially uniform (e.g., uniform) mixing of the polymer melt and the added colorant (e.g., Colorant A 204 from Figure 2). As may be understood from this Figure, a static mixer 700 may comprise a housing 702 (e.g., a substantially circular or cylindrical housing) and be inserted into a pipe or other housing (e.g., incorporated into a pipe or other housing). In the embodiment shown in this Figure, the static mixer 700 comprises a plurality of mixing bars 704 (e.g., static mixing elements) disposed within the housing 702. In particular embodiments, the static mixer 700 creates mixing by directing two or more viscous materials to follow the geometric structure of the mixing bars 704 disposed within the static mixer housing 702 that continuously divide and recombine the flow. In various embodiments, a very high degree of mixing may be achieved over a short length of static mixers. In particular embodiments, the static mixer 700 comprises no moving parts and is made of any suitable material such as, for example high strength heat treated stainless steel, a suitable plastic, or any other suitable material.

In particular embodiments, the one or more static mixers 208 shown in Figure 2 comprise any suitable static mixer, such as, for example, a Stamixco GXR 40/50 or GXR 52/60 made by Stamixco LLC of Brooklyn, New York. A suitable mixing element for use as a static mixer is described in U.S. Patent No. 8,360,630 B2, entitled "Mixing Elements for a Static Mixer and Process for Producing Such a Mixing Element" and published on January 29, 2013. In other embodiments, the one or more static mixers 208 may comprise any other suitable static mixer having a suitable arrangement of mixing bars for dispersing the colorant throughout the polymer melt. In particular embodiments, the one or more static mixers 208 comprise a plurality of individual static mixers 700 (e.g., static mixing elements) such as is shown in Figure 8. Figure 8 depicts eight static mixers 700a-h coupled to one another. In other embodiments, the one or more static mixers may comprise any suitable number of individual static mixers (e.g., up to 36 static mixers). In other embodiments, one or more static mixers may comprise any number of static mixing elements. In particular embodiments, the individual static mixers 700 may be oriented in any suitable direction relative to one another (e.g., oriented randomly relative to one another when coupled to one another as shown in Figure 8).

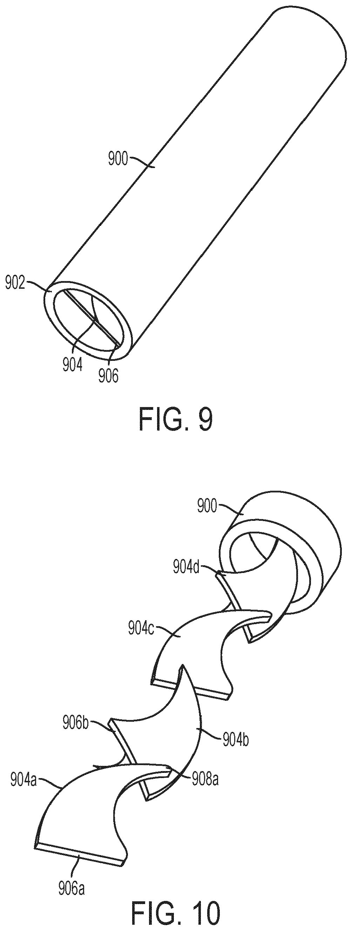

In various other embodiments, the one or more static mixers 208 may comprise a suitable static mixer comprising one or more suitable helical mixing elements. Figure 9 depicts an exemplary helical static mixer 900 comprising a substantially cylindrical (e.g., cylindrical) housing 902 in which at least one helical mixing element 904 is disposed). As shown in this Figure, the at least one helical mixing element 904 defines a leading edge 906 that extends between opposing interior portions of the cylindrical housing (e.g., along a diameter of the cylindrical housing). In various embodiments, the leading edge 906 is substantially planar (e.g., linear) and has any suitable thickness. As may be understood from this Figure, the leading edge 906 may divide (e.g., bisect) a polymer melt flowing into the helical static mixer 900 into two streams (e.g., a first stream on a first side of the leading edge 906 and a second stream on a second side). In particular embodiments, the leading edge may divide the flow into substantially equal streams as material passes the helical mixing element 904.

Figure 10 depicts the helical static mixer 900 of Figure 9 in a cutaway view that shows four helical mixing elements 904 disposed within the housing 902. As may be further understood from Figure 10, each individual helical mixing element 904 (e.g., helical mixing element 904a) comprises a substantially rectangular (e.g., rectangular) plate defining a leading edge 906a and a trailing edge 908a that has been twisted about 180 degrees (e.g., 180 degrees). As shown in this Figure, the leading edge 906a and trailing edge 908a are substantially parallel (e.g., parallel) to one another and the helical mixing element 904a extends between the leading edge 906a and trailing edge 908a in a helical pattern. Although in the embodiment shown in this Figure, the helical mixing element 904a is shown having a twist of 180 degrees between the leading edge 906a and trailing edge 908a, it should be understood that in various other embodiments, each individual helical mixing element 904 may comprise any other suitable helical shape or portion thereof. For example, in particular embodiments, the helical mixing element 904 may comprise a substantially rectangular plate defining a leading edge 906 and a trailing edge 908 that has been twisted any other suitable amount between zero and 360 degrees (e.g., 45 degrees, 90 degrees, 270 degrees, etc.) In still other embodiments, the helical mixing element 904 may have any suitable length relative to its diameter.

As may be further understood from Figure 10, in various embodiments, each particular helical mixing element 904a-d is disposed within the housing 902 at an angle to an adjacent helical mixing element 904. For example, helical mixing element 904a is disposed such that a trailing edge 908a of helical mixing element 904a forms an angle with the leading edge 906b of helical mixing element 906b. In particular embodiments, the trailing edge 908a and leading edge 906b of adjacent helical mixing elements 904 may form any suitable angle with one another. In particular embodiments, the trailing edge 908a and leading edge 906b of adjacent helical mixing elements 904 may form an angle of between about zero degrees and about ninety degrees with one another. In particular embodiments, the trailing edge 908a and leading edge 906b of adjacent helical mixing elements 904 may at least partially abut one another and be substantially co-facing (e.g., co-facing). In particular embodiments, the trailing edge 908a and leading edge 906b of adjacent helical mixing elements 904 may form a particular angle between one another (e.g., zero degrees, ninety degrees, forty-five degrees, or any other suitable angle). A suitable helical static mixer for use in the above-described process may include, for example, the any suitable helical static mixture manufactured by JLS International of Charlotte, NC.

In particular embodiments, the one or more static mixers 208 may comprise any suitable number and combination of any suitable static mixing element descried herein. For example, in particular embodiments, the one or more static mixers 208 comprise up to thirty six individual static mixing elements (e.g., thirty six static mixing elements, thirty four static mixing elements, etc.). In still other embodiments, the one or more static mixers 208 comprise any other suitable number of static mixing elements sufficient to substantially uniformly (e.g., homogeneously) mix the molten polymer with the added colorant (e.g., to substantially uniformly mix the molten polymer and the added colorant into a colored melt stream 530 as shown in Figure 6). This may include, for example, up to 40 static mixing elements, or any other suitable number).

In particular embodiments, the one or more static mixers 208 may comprise any suitable combination of static mixing elements (e.g., types of static mixers), such as, for example, any suitable break down of the static mixer 700 shown in Figure 7 and the helical static mixer 900 or helical mixing elements 904 shown in Figures 9 and 10. For example, in a particular embodiment, the one or more static mixers 208 may comprise thirty six helical mixing elements 904. In another embodiments, the one or more static mixers 208 may comprise thirty six static mixers 700 from Figure 7. In various embodiments, the one or more static mixers 208 may comprise any suitable number of alternating static mixers 700 shown in Figure 7 and helical mixing elements 904 shown in Figures 9 and 10. In various other embodiments, the one or more static mixers 208 may comprise up to forty (e.g., up to thirty six) individual static mixing elements comprising up to forty (e.g., up to thirty six) of the static mixers 700 shown in Figure 7 and balance helical mixing elements 904 shown in Figures 9 and 10. In such embodiments, the static mixers 700 from Figure 7 and the helical mixing elements 904 may be arranged in any suitable order (e.g., a specific order, a random order, a pattern such as a repeating pattern, etc.).

### Step 4: Use of a Spinning Machine to Turn the Colored Polymer into Filament

Referring back to Figure 2, after the polymer melt and the added colorant have been sufficiently mixed using the one or more static mixers 208 (e.g., homogeneously mixed), the resultant colored melt stream may be fed directly into a BCF (or "spinning") machine 212 that is configured to turn the molten polymer into bulked continuous filament (See Figure 2). In particular embodiments, the spinning machine 212 extrudes molten polymer through small holes in a spinneret in order to produce carpet yarn filament from the polymer. In particular embodiments, the molten recycled PET polymer cools after leaving the spinneret. The carpet yarn is then taken up by rollers and ultimately turned into filaments that are used to produce carpet. In various embodiments, the carpet yarn produced by the spinning machine 212 may have a tenacity between about 3 gram-force per unit denier (gf/den) and about 9 gf/den. In particular embodiments, the resulting carpet yarn has a tenacity of at least about 3 gf/den.

In particular embodiments, the spinning machine 212 used in the process described above is the Sytec One spinning machine manufactured by Oerlikon Neumag of Neumuenster, Germany. The Sytec One machine may be especially adapted for hard-to-run fibers, such as nylon or solution-dyed fibers, where the filaments are prone to breakage during processing. In various embodiments, the Sytec One machine keeps the runs downstream of the spinneret as straight as possible, uses only one threadline, and is designed to be quick to rethread when there are filament breaks.

Although the example described above describes using the Sytec One spinning machine to produce carpet yarn filament from the polymer, it should be understood that any other suitable spinning machine may be used. Such spinning machines may include, for example, any suitable one-threadline or three-threadline spinning machine made by Oerlikon Neumag of Neumuenster, Germany or any other company.

In various embodiments, prior to using the spinning machine 212 to spin the colored melt into filament, the process may utilize one or more color sensors 210 to determine a color of the colored melt. In various embodiments, the one or more color sensors 210 comprises one or more spectrographs configured to separate light shone through the polymer melt into a frequency spectrum to determine the color of the polymer melt. In still other embodiments, the one or more color sensors 210 comprises one or more cameras or other suitable imaging devices configured to determine a color of the resultant polymer melt. In particular embodiments, in response to determining that the color of the polymer melt is a color other than a desired color (e.g., the polymer melt is lighter than desired, darker than desired, a color other than the desired color, etc.) the system may: (1) discard the portion of the stream with the incorrect color; and/or (2) adjust an amount of colorant 204 that is added to the flake and/or the polymer melt upstream in order to adjust a color of the resultant polymer melt. In particular embodiments, adjusting the amount of colorant 204 is executed in a substantially automated manner (e.g., automatically) using the one or more color sensors 210 in a computer-controlled feedback control loop.

### Producing a Plurality of Different Colored Fibers Using a Single Primary Extruder

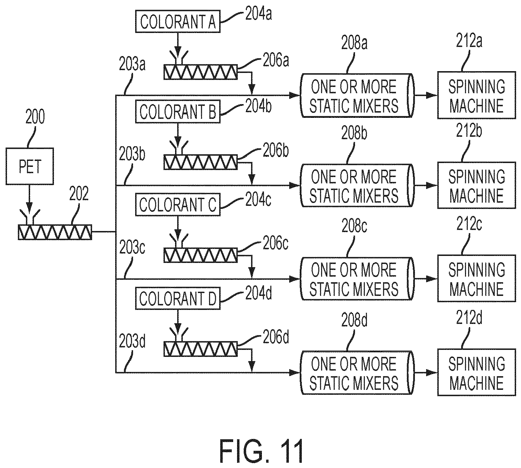

In addition to the single colorant added to a single polymer stream from a primary extruder 202 described above with respect to Figure 2, the process described herein may be utilized to produce a plurality of different colored filament from a single primary extruder. Figure 11 depicts a process for producing a plurality of different colored filament from a single primary extruder (e.g., a single MRS extruder) according to a particular embodiment. As may be understood from Figure 11, the process involves splitting the polymer melt from the primary extruder 202 into a plurality of individual polymer streams 203a-d (e.g., four individual polymer streams) using any suitable technique. In other embodiments, the process may include splitting the polymer melt from the primary extruder 202 into any suitable number of individual polymer streams (e.g., two individual polymer streams, three individual polymer streams, four individual polymer streams, five individual polymer streams, six individual polymer streams, seven individual polymer streams, eight individual polymer streams, etc.)

As shown in this Figure, a colorant (e.g., Colorant A-D 204a-d) is added to each individual polymer stream, for example, using a respective extruder 206a-d as described above. For example, Colorant C 204 is added to individual polymer stream 203c using extruder 206c.

Once the respective Colorant A-D 204a-d has been added to the respective individual polymer stream 203a-d, each individual polymer stream 203a-d with added Colorant A-D 204a-d is substantially uniformly mixed using respective one or more static mixers 208a-d. For example, once Colorant D 204d has been added to individual polymer stream 203d, the resultant colorant/polymer mixture passes through the one or more static mixers 208d to mix the Colorant D 204d and individual polymer stream 203d (e.g., to substantial homogeneity). Following mixture by the one or more static mixers 208a-d, the resultant respective colored melt streams are spun into filament using respective spinning machines 212a-d.

In various embodiments, it may be important to monitor the output of the extruder to determine a throughput of each individual polymer stream 203a-d. In such embodiments, monitoring throughput may ensure that each individual polymer stream 203a-d has the proper color letdown ratio in order to add a proper amount of Colorant A-D 204a-d to achieve a desired color of bulked continuous filament.

As may be understood from Figure 11, splitting extruded polymer from a primary extruder 202 into a plurality of polymer streams 203a-d prior to the addition of colorant may enable the production of a plurality of colored filament using a single primary extruder 202. Furthermore, by using a plurality of different colorants and extruders downstream of the primary extruder 202, the process may facilitate a reduction in waste when changing a colorant used. For example, when using a single extruder in which color is added upstream of the extruder, there is waste associated with changing over a color package in that the extruder must run sufficiently long between changes to ensure that all of the previous color has cleared the extruder (e.g., such that none of the previous color will remain and mix with the new color). In some embodiments, the wasted filament as a result of a switch in color may include up to several thousand pounds of filament (e.g., up to 4000 pounds). Using a smaller secondary extruder 206a-d to introduce colorant to the various individual polymer streams 203a-d downstream from the primary extruder 202 may reduce (e.g., substantially reduce) the amount of waste associated with a changeover of colorant (e.g., to below about 100 pounds per changeover).

### Alternative Embodiments

Various embodiments of a process for producing various colored bulked continuous filament may include features that vary from or are in addition to those described above. Exemplary alternative embodiments are described below.

### Addition of Liquid Colorant to Melt Stream Using Pump

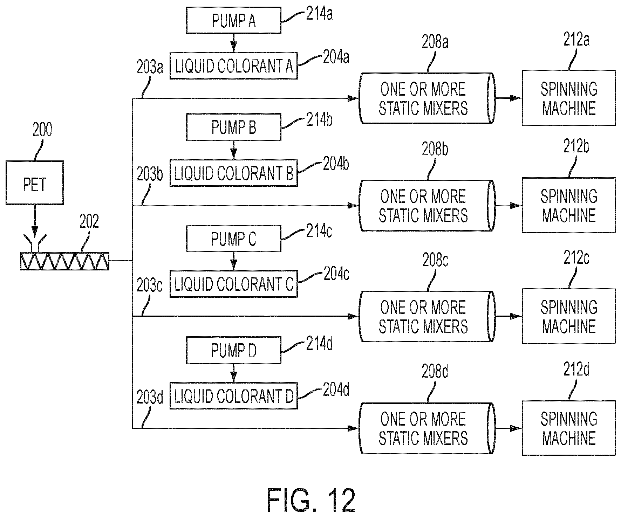

Figure 12 depicts an alternative process flow for that, in many respects is similar to the process flow shown in Figure 11. In the embodiment shown in Figure 12, however, liquid colorant 214a-d is added to the individual polymer streams 203a-d using a respective pump 214a-d rather than an extruder. In various embodiments, using a liquid colorant may have the benefit of additional cost saving due to not having to use any additional secondary extruders (e.g., which may have a greater initial cost outlay than a pump, greater running costs than a pump, etc.). In particular embodiments in which a pump 214a-d is used to inject the liquid colorant 214a-d into the individual polymer streams 203a-d, the process may further include exchanging a hose used to connect the pump 214a-d to the individual polymer streams 203a-d when exchanging a particular liquid colorant (e.g., liquid colorant 204a) for a different liquid colorant (e.g., a liquid colorant of a different color). By exchanging the hose when exchanging colorants, waste may further be reduced in that the replacement hose is pre-purged of any residual colorant of the previous color.

### More Detailed Discusssion of the Use of Liquid Colorant in Combination with a Static Mixing Assembly

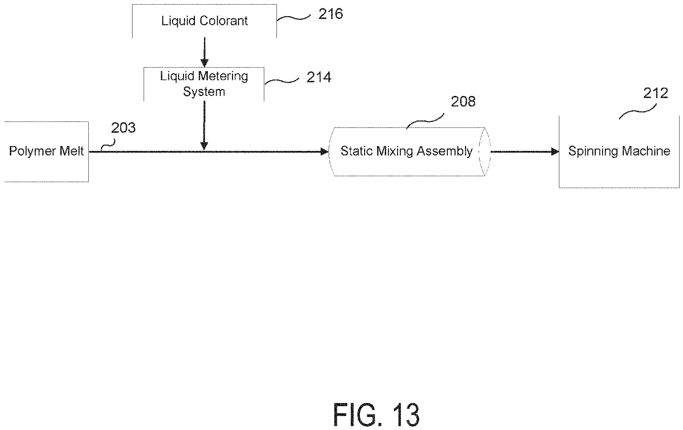

Figure 13 depicts a flow process according to a particular embodiment in which liquid colorant 216 is added to a polymer melt 203 using a liquid metering system 214 (e.g., a pump). As may be understood from this figure and the further description above, a process according to a particular embodiment may pass (e.g., pump) a polymer melt 203 (e.g., which may comprise recycled PET or other suitable polymer) through a static mixing assembly 208 prior to using a spinning machine 212 to form the polymer melt 203 into bulked continuous filament (e.g., carpet yarn). As shown in Figure 13, prior to passing the polymer melt 203 through the static mixing assembly 208 the process, in various embodiments, may involve pumping liquid colorant 216 into the polymer melt 203 using a liquid metering system 214 (e.g., one or more liquid metering systems). In various embodiments, the static mixing assembly 208 may be configured to at least substantially mix (e.g., uniformly mix) the polymer melt 203 with the liquid colorant 216 prior to forming the colored mixture into bulked continuous filament.

In particular embodiments, the liquid colorant 216 may comprise any suitable liquid colorant 216, which may, for example, have any suitable pigment. In a particular example, the liquid colorant may comprise any suitable pigment produced by BASF of Ludwigshafen, Germany. In various embodiments, the liquid colorant may comprise any suitable titanium dioxide colorant. In a particular embodiment, the liquid colorant comprises a ColorMatrix liquid colorant produced by the PolyOne Corporation of Avon Lake, Ohio.

In various embodiments, the use of liquid colorant 216 may result in more consistent color formulations of the BCF produced using the process described herein when compared to BCF produced from molten polymer mixed with a pelletized color concentrate (e.g., as described above). Because a liquid metering system 214 (e.g., such as the liquid metering system described below) may be configured to inject as little as a single drop of liquid colorant 216 at a time, a process that utilizes liquid colorant 216 may be better suited for producing consistent color BCF than a system that utilizes color pellets (e.g., because the system that utilizes color pellets may only change an amount of color added to a polymer melt in pellet-sized increments).

In other embodiments the use of liquid colorants may provide for high color consistency between batches of BCF colored with a liquid colorant. In various embodiments, the use of liquid colorant may result in a reduction in wastage (e.g., of the liquid colorant) as a result of high dosing accuracy (e.g., which may be achieved using the liquid metering system 214 described below) and high product recovery rates. In still other embodiments, liquid colorants may be relatively highly concentrated, which may, for example, enable the process to utilize a low addition rate to the polymer melt in order to achieve a desired color. In some embodiments, the addition rate may be, for example, between about two percent and about six percent by weight to the polymer melt.

As discussed above, any process described herein may utilize a liquid metering system 214 to inject the liquid colorant 216 into the polymer melt 203. In a particular embodiment, the process may utilize one or more Polyone ColorMatrix FlexCart Liquid Metering Systems manufactured by the PolyOne Corporation of Avon Lake, Ohio.

In various embodiments, the liquid metering system 214 is configured to provide flexible metering of liquid colorant 216 to the polymer melt 203. For example, the liquid metering system 214 may comprise one or more suitable pumps for delivering (e.g., injecting) liquid colorant 216 into the polymer melt 203. In particular embodiments, the one or more suitable pumps may comprise, for example, one or more peristaltic pumps (e.g., which may be used for short production runs and frequent color changes), one or more progressing cavity pumps (e.g., which may be used for longer production runs in extrusion applications), and/or any other suitable pump or combination of pumps. In various embodiments, the one or more pumps may be interchangeable (e.g., the liquid metering system 214 may be configured to enable a user to exchange one or more of the one or more pumps for a new type of pump or a clean replacement of a similar pump).

In particular embodiments, the liquid metering system 214 comprises a cassette, which may, for example, house a reservoir (e.g., for storing liquid colorant), the one or more pumps, and one or more delivery tubes. In various embodiments, the cassette may comprise one or more reservoirs which may, for example, be configured to hold one or more different colored liquid colorants. In particular embodiments, the liquid metering system 214 may comprise a tote tank of up to about 25 different colored liquid colorants. In various embodiments, the liquid metering system 214 is configured to combine the different colored liquid colorants in different ratios in order to produce different desired bulked continuous filament color.

In various embodiments, the liquid metering system 214 comprises a suitable control system (e.g., comprising a computer controller, processor, etc.), which may, for example, be configured to control operation of the one or more pumps. In particular embodiments, the control system may be configured to control operation of the one or more pumps in order to cause the one or more pumps to deliver the liquid colorant 216 to the polymer melt 203 at a particular rate (e.g., a particular flow rate). In various embodiments, the control system is configured to operate the liquid metering system 214 to inject the liquid colorant at a metering rate of up to about 10 cubic centimeters per second (e.g., 10 cubic centimeters per second). In some embodiments, the liquid metering system 214 is configured to deliver a substantially continuous injection of liquid colorant 216 into the polymer melt 203 at a substantially consistent rate (e.g., which may, for example, ensure that the bulked continuous filament produced by the process has a relatively consistent color).

As described more fully above, after the step of injecting a liquid colorant 216 into the polymer melt 203 using the liquid metering system 214, the process, in various embodiments, comprises passing the polymer melt and the liquid colorant 216 through the static mixing assembly 208. In particular embodiments, the static mixing assembly 208 comprises any suitable combination of static mixers (e.g., static mixing elements) described herein. According to the invention, the static mixing assembly 208 comprises at least about twenty static mixers (e.g., at least twenty static mixers). In other embodiments, the static mixing assembly 208 comprises between about twenty static mixing elements (e.g., twenty static mixers) and about forty static mixing elements (e.g., forty static mixers). In other embodiments, the static mixing assembly 208 comprises between about thirty two static mixing elements (e.g., thirty two static mixers) and about forty static mixing elements (e.g., forty static mixers). In a particular embodiment, the static mixing assembly 208 comprises forty static mixers. In still other embodiments, the static mixing assembly 208 comprises any suitable number of static mixers (e.g., static mixing elements) to sufficiently thoroughly mix (e.g., uniformly mix) the polymer melt 203 with the liquid colorant 216 (e.g., sufficiently thoroughly mixed to ensure that the resulting filament produced by the process has a substantially uniform color).

In various embodiments, a flow of the polymer melt and liquid colorant as the mixture approaches the static mixing assembly 208 may be substantially laminar (e.g., laminar). As such, the polymer melt and liquid colorant may not mix when the liquid colorant is added to (e.g., injected into) the polymer melt. In particular embodiments, the static mixing assembly 208 is configured to disrupt the flow of the liquid colorant and polymer melt to sufficiently thoroughly mix (e.g., uniformly mix) the polymer melt 203 with the liquid colorant 216 (e.g., sufficiently thoroughly mixed to ensure that the resulting filament produced by the process has a substantially uniform color). This may, for example, result in a more disrupted flow as the mixture passes through each progressive static mixer in the static mixing assembly 208.

In particular embodiments, the process described herein is configured to produce a sufficiently uniform mixture of the liquid colorant 216 and polymer melt 203 prior to spinning in the spinning machine 212 without the use of one or more dynamic mixers or dynamic mixing elements. In this way, the process may rely on mechanical mixing produced by the static mixing assembly 208 as the polymer melt/liquid colorant mixture passes through the static mixing assembly 208. In some embodiments, not using dynamic mixers may further reduce production costs for the colored bulked continuous filament (e.g., through power conservation, savings on equipment costs, etc.).

In particular embodiments, the process described above may be suitable for producing limited runs of bulked continuous filament of a particular color. This may, for example, enable a product line to produce a limited run amount of bulked continuous filament in a made-to-order manner (e.g., in any suitable desired color). In particular embodiments, the process is configured to produce bulked continuous filament in a manner that reduces waste produced when switching from a first liquid colorant having a first color to a second liquid colorant having a second color.

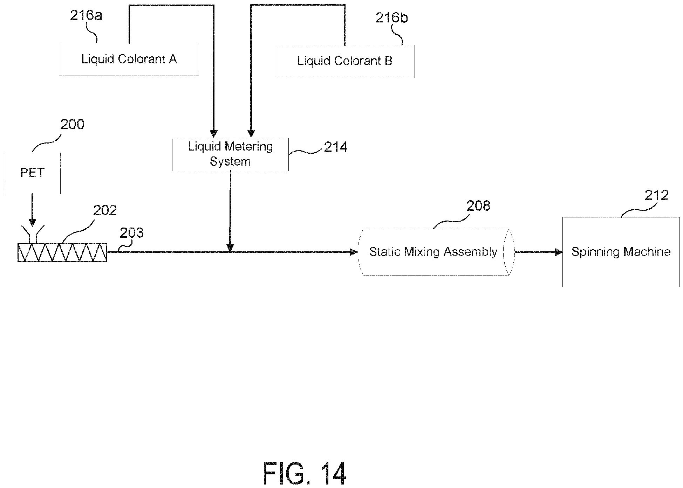

For example, when switching between producing bulked continuous filament of a first color to producing bulked continuous filament of a second color, it may be necessary to change the liquid colorant 216 added to the polymer melt (e.g., from a first liquid colorant that would result in bulked continuous filament of the first color to a second liquid colorant that would result in bulked continuous filament of the second color). As may be understood by one skilled in the art, after switching from adding the first liquid colorant to the polymer melt to adding the second liquid colorant to the polymer melt, residual first liquid colorant may remain in in the system between the point in the process at which the first liquid colorant is added and the spinning machine 212. For example, residual first colorant may remain in the static mixing assembly 208, the polymer melt 203, the liquid metering system 216, or any other physical mechanism used in the process (such as any mechanism shown in Figures 13 or 14) or any piping, tubing, or transfer line (e.g., heated transfer line) which may connect the various components of the system.

As may be understood by one skilled in the art, in various embodiments, after running the process with the second colorant for a suitable amount of time, the bulked continuous filament produced by the process will eventually be of the second, desired color (e.g., because the first colorant will eventually be substantially flushed out the system). Between the point at which there is a changeover in adding the second colorant to the process rather than the first colorant and the point at which the process begins to produce the desired color of bulked continuous filament, the process will produce some waste bulked continuous filament that is of an undesired color (e.g., due at least in part to the residual first colorant).

As may be understood from Figure 14, when transitioning from the first liquid colorant (e.g., Liquid Colorant A 216a) to the second liquid colorant (e.g., Liquid Colorant B 216b), in particular embodiments, the control system of the liquid metering system may be configured to cause the one or more pumps to cease injecting the first colorant into the polymer stream. In particular embodiments, the system may, for example, be configured to delay beginning to inject the second liquid colorant into the polymer melt until the residual first liquid colorant has been sufficiently purged from the various components of the system (e.g., sufficiently purged such that introduction of the second liquid colorant should result in bulked continuous filament of the second, desired color). The control system may then be configured to cause the liquid metering system to inject the second liquid colorant into the polymer melt. The process may then continue by passing the polymer melt and the second liquid colorant through the static mixing assembly and then forming the polymer melt into bulked continuous filament. In this way, the method may conserve the second liquid colorant by not injecting and mixing the second liquid colorant into polymer melt that will ultimately form waste bulked continuous filament.

In other embodiments, the system may be configured to substantially immediately begin to inject the second liquid colorant into the polymer melt after ceasing to inject the first liquid colorant. In such embodiments, the system may be configured to reduce an amount of waste polymer (e.g., waste BCF).

In particular embodiments, the time between the control system ceasing injection of the first liquid colorant and a time at which the process begins to produce a properly colored fiber in the second, desired color following the introduction of the second liquid colorant may define a color changeover time. In various embodiments, the bulked continuous fiber produced during the color changeover time may comprise bulked continuous filament in a waste color (e.g., in a color other than the first or second color). In various embodiments, bulked continuous filament in the waste color may be unsuitable for use (e.g., may not be suitable for use in producing carpet, may not be suitable for running through the recycling process described above, etc.). In some embodiments, the bulked continuous filament produced in the waste color may be true waste in that any costs associated with its production may not be recuperated.

In particular embodiments, the color changeover time may be up to about six minutes. In other embodiments, the color changeover time may be up to about ten minutes, or any other suitable time. In various embodiments, the system is configured to produce at least a particular amount of bulked continuous filament following ceasing injecting the first liquid colorant prior to beginning to inject the second liquid colorant. In a particular embodiments, the process comprises producing one doff of yarn (e.g., BCF) prior to beginning to inject the second liquid colorant. In a particular embodiments, a doff may include a set of full-size yarn packages produced by one filament extrusion (e.g., spinning) machine. In other embodiments, such as embodiments in which the system is configured to substantially immediately begin injecting the second liquid colorant after ceasing to inject the first liquid colorant, the system may be configured to produce one doff of waste BCF during the changeover time.

In particular embodiments, the process may further reduce a changeover time from a first color to a second color and increase cost savings by, for example, exchanging one or more internal components of the liquid metering system when beginning to run a second color (e.g., such as the one or more pumps, fittings, etc.), or taking any other suitable cost or time-saving measure.

In various embodiments, the waste bulked continuous filament produced using the process described herein may be considerably lower than waste bulked continuous filament produced during color changeovers using other processes (e.g., such as other processes in which colorant is added to PET prior to extrusion in a primary extruder such as an MRS extruder). For example, in various embodiment, the process described herein may limit waste bulked continuous filament to an amount of bulked continuous filament produced in a single doff of BCF. In some embodiments, the use of liquid colorant may result in a savings of about two cents per pound of fiber (e.g., over processes that utilize one or more color concentrates or other techniques).

### Conclusion

Many modifications and other embodiments of the invention will come to mind to one skilled in the art to which this invention pertains having the benefit of the teachings presented in the foregoing descriptions and the associated drawings. Also, while various embodiments are discussed above in regard to producing carpet filament from PET, similar techniques may be used to produce carpet filament from other polymers. Similarly, while various embodiments are discussed above in regard to producing carpet filament from PET, similar techniques may be used to produce other products from PET or other polymers. For example, various other methods may utilize one or more steps described herein to add liquid or other colorant to a polymer other than PET (e.g., such as PTT, polystyrene, polyvinyl, nylon, etc.). In such embodiments, a system and/or method may utilize one or more static mixers in order to at least partially (e.g., uniformly mix) the non-PET polymer with a suitable liquid or other colorant.

Furthermore, any numerical ranges described herein are intended to capture every integer and fractional value within the described range (e.g., every rational number value within the described range). For example, it should be understood that a range describing a letdown ratio of between about two percent and about eight percent is intended to capture and disclose every rational number value percentage between two percent and eight percent (e.g., 2%, 3%, 4%, 5%, 6%, 7%, 8%, 2.1%, 2.01%, 2.001% .... 7.999% and so on). Additionally, terms such as 'about', 'substantially', etc., when used to modify structural descriptions or numerical values are intended to capture the stated shape, value, etc. as well as account for slight variations as a result of, for example, manufacturing tolerances. For example, the term `substantially rectangular' is intended to describe shapes that are both exactly rectangular (e.g., have four sides that meet at ninety degree angles) as well as shapes that are not quite exactly rectangular (e.g., shapes having four sides that meet at an angle in an acceptable tolerance of ninety degrees, such as 90° +/-4°)

## Claims

1. A method of manufacturing colored bulked continuous carpet filament from a polymer melt (203) comprising polyethylene terephthalate (PET) using liquid colorant, the method comprising:
- providing a static mixing assembly (208) comprising at least twenty static mixers arranged in series;
- providing a liquid metering system (214);
- providing a first liquid colorant (216a) having a first color;
using the liquid metering system (214) to inject the first liquid colorant (216a) into the polymer melt (203);
after the step of using the liquid metering system (214) to inject the first liquid colorant (216a) into the polymer melt (203), passing the polymer melt (203) and the first liquid colorant (216a) through the static mixing assembly (208) to substantially thoroughly mix the polymer melt (203) with the first liquid colorant (216a); and
after the step of passing the polymer melt (203) through the static mixing assembly (208) to substantially thoroughly mix the polymer melt (203) with the first liquid colorant (216a), forming the polymer melt (203) into bulked continuous carpet filament having a color based on the first color,
**characterized in that** the method comprises the steps of:
- providing a second liquid colorant (216b) having a second color;
- using the liquid metering system (214) to cease injection of the first liquid colorant (216a) into the polymer melt (203);
- after the step of using the liquid metering system (214) to cease injection of the first liquid colorant (216a) into the polymer melt (203), using the liquid metering (214) system to inject the second liquid colorant (216b) into the polymer melt (203);
- forming the polymer melt (203) into bulked continuous carpet filament having a waste color for at least a color changeover time;
- after the color changeover time has passed, passing the polymer melt (203) and the second liquid colorant (216b) through the static mixing assembly (208) to substantially thoroughly mix the polymer melt (203) with the second liquid colorant (216b);
- after the step of passing the polymer melt (203) through the static mixing assembly to substantially thoroughly mix the polymer melt (203) with the second liquid colorant (216b), forming the polymer melt (203) into bulked continuous carpet filament having a color based on the second color.

2. The method of claim 1, wherein said static mixing assembly (208) comprises at least thirty static mixers.

3. The method of claim 1 or 2, the method further comprising:
providing a multi-screw extruder (202); and
before the step of using the liquid metering system (214) to inject the first liquid colorant (216a) into the polymer melt (203), using the multi-screw extruder (202) to at least partially melt the PET into the polymer melt (203) and at least partially purify the polymer melt (203).

4. The method of any of the preceding claims, the method further comprising: providing a spinning machine (212); and forming the polymer melt (203) into bulked continuous carpet filament using the spinning machine (212).

5. The method of claim 4, wherein the colored melt stream is fed directly into the spinning machine (212) that is configured to turn the molten polymer into bulk continuous filament.

6. The method of any of the preceding claims, wherein the first liquid colorant (216a) is provided by at least partially melting pelletized color concentrate by means of a secondary extruder (206), prior to adding the first liquid colorant (216a) to the polymer melt (203).

7. The method of any of the preceding claims, wherein the step of substantially thoroughly mixing the polymer melt with the first liquid colorant comprises substantially thoroughly mixing the polymer melt with the first liquid colorant without using a dynamic mixer.

8. The method of any of the preceding claims, wherein the color changeover time is less than about six minutes.

9. The method of any of the preceding claims, wherein the bulked continuous filament having the waste color comprises about one doff of bulked continuous filament.

10. The method of any of the preceding claims, wherein the at least twenty static mixers are structurally identical, wherein the static mixers comprise a first static mixer and a second static mixer; wherein the first static mixer is disposed adjacent the second static mixer in the static mixing assembly; wherein the first static mixer is disposed in a first orientation relative to the static mixing assembly; and wherein the second static mixer is disposed in an orientation other than the first orientation.

11. The method of any of the preceding claims, wherein the at least twenty static mixers are helical static mixers.

12. The method of any of the preceding claims, wherein the method comprises the step of exchanging one or more internal components of the liquid metering system when beginning to run a second color; preferably the one or more pumps or fittings.

13. The method of any of the preceding claims 1 - 12, wherein the method comprises the step wherein beginning to inject the second liquid colorant into the polymer melt is delayed until the residual first liquid colorant has been sufficiently purged from the various components of the system, such that introduction of the second liquid colorant results in bulked continuous filament of the second, desired color.

14. The method of any of the preceding claims 1 - 12, wherein injecting the second liquid colorant into the polymer melt begins immediately after ceasing to inject the first liquid colorant.

## Patentansprüche

1. Verfahren zum Fertigen von gefärbtem gebauschtem Endlosteppichfilament aus einer Polymerschmelze (203), die Polyethylenterephthalat (PET) umfasst, unter Verwendung von flüssigem Färbemittel, wobei das Verfahren umfasst:
- Bereitstellen einer statischen Mischanordnung (208), die mindestens zwanzig statische Mischer umfasst, die in Reihe angeordnet sind;
- Bereitstellen eines Flüssigkeitsdosiersystems (214) ;
- Bereitstellen eines ersten flüssigen Färbemittels (216a) mit einer ersten Farbe;
Verwenden des Flüssigkeitsdosiersystems (214) zum Injizieren des ersten flüssigen Färbemittels (216a) in die Polymerschmelze (203);
nach dem Schritt des Verwendens des Flüssigkeitsdosiersystems (214) zum Injizieren des ersten flüssigen Färbemittels (216a) in die Polymerschmelze (203) Leiten der Polymerschmelze (203) und des ersten flüssigen Färbemittels (216a) durch die statische Mischanordnung (208), um die Polymerschmelze (203) und das erste flüssige Färbemittel (216a) im Wesentlichen gründlich zu durchmischen; und
nach dem Schritt des Leitens der Polymerschmelze (203) durch die statische Mischanordnung (208), um die Polymerschmelze (203) und das erste flüssige Färbemittel (216a) im Wesentlichen gründlich zu durchmischen, Ausbilden der Polymerschmelze (203) zu gebauschtem Endlosteppichfilament mit einer Farbe, die auf der ersten Farbe basiert,
**dadurch gekennzeichnet, dass** das Verfahren die Schritte umfasst:
- Bereitstellen eines zweiten flüssigen Färbemittels (216b) mit einer zweiten Farbe;
- Verwenden des Flüssigkeitsdosiersystems (214) zum Beenden der Injektion des ersten flüssigen Färbemittels (216a) in die Polymerschmelze (203);
- nach dem Schritt des Verwendens des Flüssigkeitsdosiersystems (214) zum Beenden der Injektion des ersten flüssigen Färbemittels (216a) in die Polymerschmelze (203) Verwenden des Flüssigkeitsdosiersystems (214) zum Injizieren des zweiten flüssigen Färbemittels (216b) in die Polymerschmelze (203);
- Ausbilden der Polymerschmelze (203) zu gebauschtem Endlosteppichfilament mit einer nicht nutzbaren Farbe für mindestens eine Farbwechselzeit;
- nachdem die Farbwechselzeit verstrichen ist, Leiten der Polymerschmelze (203) und des zweiten flüssigen Färbemittels (216b) durch die statische Mischanordnung (208), um die Polymerschmelze (203) im Wesentlichen gründlich mit dem zweiten flüssigen Färbemittel (216b) zu durchmischen;
- nach dem Schritt des Leitens der Polymerschmelze (203) durch die statische Mischanordnung, um die Polymerschmelze (203) und das zweite flüssige Färbemittel (216b) im Wesentlichen gründlich zu durchmischen, Ausbilden der Polymerschmelze (203) zu gebauschtem Endlosteppichfilament mit einer Farbe, die auf der zweiten Farbe basiert.

2. Verfahren nach Anspruch 1, wobei die statische Mischanordnung (208) mindestens dreißig statische Mischer umfasst.

3. Verfahren nach Anspruch 1 oder 2, wobei das Verfahren des Weiteren umfasst:
Bereitstellen eines Mehrschneckenextruders (202); und
vor dem Schritt des Verwendens des Flüssigkeitsdosiersystems (214) zum Injizieren des ersten flüssigen Färbemittels (216a) in die Polymerschmelze (203) Verwenden des Mehrschneckenextruders (202), um das PET mindestens teilweise zu der Polymerschmelze (203) zu schmelzen und die Polymerschmelze (203) mindestens teilweise zu reinigen.

4. Verfahren nach einem der vorhergehenden Ansprüche, wobei das Verfahren des Weiteren umfasst: Bereitstellen einer Spinnmaschine (212); und Ausbilden der Polymerschmelze (203) zu gebauschtem Endlosteppichfilament unter Verwendung der Spinnmaschine (212).

5. Verfahren nach Anspruch 4, wobei der gefärbte Schmelzestrom direkt in die Spinnmaschine (212) eingespeist wird, die ausgestaltet ist, um das geschmolzene Polymer in gebauschtes Endlosfilament umzuwandeln.

6. Verfahren nach einem der vorhergehenden Ansprüche, wobei das erste flüssige Färbemittel (216a) bereitgestellt wird, indem pelletiertes Farbkonzentrat mindestens teilweise mittels eines Sekundärextruders (206) geschmolzen wird, bevor das erste flüssige Färbemittel (216a) zu der Polymerschmelze (203) gegeben wird.

7. Verfahren nach einem der vorhergehenden Ansprüche, wobei der Schritt des im Wesentlichen gründlichen Durchmischens der Polymerschmelze mit dem ersten flüssigen Färbemittel im Wesentlichen gründliches Durchmischen der Polymerschmelze mit dem ersten flüssigen Färbemittel ohne Verwendung eines dynamischen Mischers umfasst.

8. Verfahren nach einem der vorhergehenden Ansprüche, wobei die Farbwechselzeit weniger als etwa sechs Minuten beträgt.

9. Verfahren nach einem der vorhergehenden Ansprüche, wobei das gebauschte Endlosfilament mit der nicht nutzbaren Farbe etwa ein Doff des gebauschten Endlosfilaments umfasst.

10. Verfahren nach einem der vorhergehenden Ansprüche, wobei die mindestens zwanzig statischen Mischer strukturell identisch sind, wobei die statischen Mischer einen ersten statischen Mischer und einen zweiten statischen Mischer umfassen; wobei der erste statische Mischer in der statischen Mischanordnung benachbart zu dem zweiten statischen Mischer angeordnet ist; wobei der erste statische Mischer in einer ersten Orientierung relativ zu der statischen Mischanordnung angeordnet ist; und wobei der zweite statische Mischer in einer anderen Orientierung als der ersten Orientierung angeordnet ist.

11. Verfahren nach einem der vorhergehenden Ansprüche, wobei die mindestens zwanzig statischen Mischer spiralförmige statische Mischer sind.

12. Verfahren nach einem der vorhergehenden Ansprüche, wobei das Verfahren den Schritt des Tauschens von einer oder mehreren internen Komponenten des Flüssigkeitsdosiersystems umfasst, wenn mit dem Durchlauf einer zweiten Farbe begonnen wird; vorzugsweise von der einen oder mehreren Pumpen oder Armaturen.

13. Verfahren nach einem der vorhergehenden Ansprüche 1 bis 12, wobei das Verfahren den Schritt umfasst, bei dem der Beginn des Injizierens des zweiten flüssigen Färbemittels in die Polymerschmelze verzögert wird, bis das restliche erste flüssige Färbemittel aus den verschiedenen Komponenten des Systems ausreichend ausgespült ist, so dass die Einbringung des zweiten flüssigen Färbemittels zu gebauschtem Endlosfilament mit der zweiten gewünschten Farbe führt.

14. Verfahren nach einem der vorhergehenden Ansprüche 1 bis 12, wobei Injizieren des zweiten flüssigen Färbemittels in die Polymerschmelze unmittelbar nach Beendigung des Injizierens des ersten flüssigen Färbemittels beginnt.

## Revendications

1. Procédé destiné à la fabrication d'un filament continu gonflant coloré pour moquette à partir d'une masse fondue polymère (203) qui comprend du polyéthylène téréphtalate (PET) en utilisant un colorant liquide, le procédé comprenant le fait de :
- procurer un assemblage de mélange statique (208) qui comprend au moins vingt mélangeurs statiques qui sont montés en série ;
- procurer un système de dosage de liquide (214) ;
- procurer un premier colorant liquide (216a) qui possède une première couleur ;
- utiliser le système de dosage de liquide (214) pour injecter le premier colorant liquide (216a) dans la masse fondue polymère (203) ;
- après l'étape au cours de laquelle on utilise le système de dosage de liquide (214) dans le but d'injecter le premier colorant liquide (216a) dans la masse fondue polymère (203), faire passer la masse fondue polymère (203) et le premier colorant liquide (216a) à travers l'assemblage de mélange statique (208) dans le but de mélanger de manière essentiellement complète la masse fondue polymère (203) avec le premier colorant liquide (216a) ; et
- après l'étape au cours de laquelle on fait passer la masse fondue polymère (203) à travers l'assemblage de mélange statique (208) dans le but de mélanger de manière essentiellement complète la masse fondue polymère (203) avec le premier colorant liquide (216a), transformer la masse fondue polymère (203) en un filament continu gonflant pour moquette qui possède une couleur basée sur la première couleur ;
**caractérisé en ce que** le procédé comprend les étapes au cours desquelles :
- on procure un second colorant liquide (216b) qui possède une seconde couleur ;
- on utilise le système de dosage de liquide (214) pour interrompre l'injection du premier colorant liquide (216a) dans la masse fondue polymère (203) ;
- après l'étape au cours de laquelle on utilise le système de dosage de liquide (214) pour interrompre l'injection du premier colorant liquide (216a) dans la masse fondue polymère (203), on utilise le système de dosage de liquide (214) pour injecter le second colorant liquide (216b) dans la masse fondue polymère (203) ;
- on transforme la masse fondue polymère (203) en un filament continu gonflant pour moquette qui possède une couleur à jeter pendant au moins un laps de temps qui correspond au changement de couleur ;
- une fois le laps de temps correspondant au changement de couleur écoulé, on fait passer la masse fondue polymère (203) et le second colorant liquide (216b) à travers l'assemblage de mélange statique (208) dans le but de mélanger de manière essentiellement complète la masse fondue polymère (203) avec le second colorant liquide (216b) ;
- après l'étape au cours de laquelle on fait passer la masse fondue polymère (203) à travers l'assemblage de mélange statique dans le but de mélanger de manière essentiellement complète la masse fondue polymère (203) avec le second colorant liquide (216b), on transforme la masse fondue polymère (203) en un filament continu gonflant pour moquette qui possède une couleur basée sur la seconde couleur.

2. Procédé selon la revendication 1, dans lequel ledit assemblage de mélange statique (208) comprend au moins trente mélangeurs statiques.

3. Procédé selon la revendication 1 ou 2, le procédé comprenant en outre le fait de :
- procurer une extrudeuse du type à vis multiples (202) ; et
- avant l'étape au cours de laquelle on utilise le système de dosage de liquide (214) dans le but d'injecter le premier colorant liquide (216a) dans la masse fondue polymère (203), utiliser l'extrudeuse du type à vis multiples (202) à des fins de mise en fusion au moins partielle du PET afin d'obtenir la masse fondue polymère (203) et à des fins de purification au moins partielle de la masse fondue polymère (203).

4. Procédé selon l'une quelconque des revendications précédentes, le procédé comprenant en outre le fait de procurer une machine de filature (212) ; et transformer la masse fondue polymère (203) en un filament continu gonflant pour moquette en utilisant la machine de filature (212).

5. Procédé selon la revendication 4, dans lequel le courant de masse fondue colorée est alimenté de manière directe dans la machine de filature (212) qui est configurée pour transformer le polymère en fusion en un filament continu gonflant.

6. Procédé selon l'une quelconque des revendications précédentes, dans lequel on obtient le premier colorant liquide (216a) par l'intermédiaire d'une mise en fusion au moins partielle d'un concentré de colorant sous la forme de pastilles au moyen d'une extrudeuse secondaire (206), avant d'ajouter le premier colorant liquide (216a) à la masse fondue polymère (203).

7. Procédé selon l'une quelconque des revendications précédentes, dans lequel l'étape au cours de laquelle on mélange de manière essentiellement complète la masse fondue polymère avec le premier colorant liquide comprend le fait de mélanger de manière essentiellement complète la masse fondue polymère avec le premier colorant liquide sans utiliser un mélangeur dynamique.

8. Procédé selon l'une quelconque des revendications précédentes, dans lequel le laps de temps qui correspond au changement de couleur est inférieur à environ six minutes.

9. Procédé selon l'une quelconque des revendications précédentes, dans lequel le filament continu gonflant qui possède la couleur à jeter comprend environ une levée de filament continu gonflant.

10. Procédé selon l'une quelconque des revendications précédentes, dans lequel lesdits au moins vingt mélangeurs statiques sont identiques du point de vue structurel ; dans lequel les mélangeurs statiques comprennent un premier mélangeur statique et un second mélangeur statique ; dans lequel le premier mélangeur statique est disposé en position adjacente au second mélangeur statique dans l'assemblage de mélange statique ; dans lequel le premier mélangeur statique est disposé dans une première orientation par rapport à l'assemblage de mélange statique ; et dans lequel le second mélangeur statique est disposé dans une orientation autre que la première orientation.

11. Procédé selon l'une quelconque des revendications précédentes, dans lequel lesdits au moins vingt mélangeurs statiques sont des mélangeurs statiques hélicoïdaux.

12. Procédé selon l'une quelconque des revendications précédentes, dans lequel le procédé comprend l'étape dans laquelle on procède à un échange d'un ou de plusieurs composants internes du système de dosage liquide lorsqu'on commence à travailler avec une seconde couleur, de préférence lesdits un ou plusieurs raccords ou pompes.

13. Procédé selon l'une quelconque des revendications précédentes 1 à 12, dans lequel le procédé comprend l'étape dans laquelle le démarrage de l'injection du second colorant liquide dans la masse fondue polymère est retardé jusqu'à ce que le premier colorant liquide résiduel ait été suffisamment éliminé des divers composants du système, d'une manière telle que l'introduction du second colorant liquide donne naissance à un filament continu gonflant qui possède la seconde couleur désirée.

14. Procédé selon l'une quelconque des revendications précédentes 1 à 12, dans lequel l'injection du second colorant liquide dans la masse fondue polymère commence immédiatement après l'interruption de l'injection du premier colorant liquide.
